# EUROPEAN PATENT APPLICATION

(11) **EP 1 060 919 A2**
(43) Date of publication of application: **20.12.2000**
(21) Application number: 00660111.6
(22) Date of filing: 15.06.2000
(51) Int. Cl.: B60J 5/06

(54) **Truck trailer body**

(30) Priority: 17.06.1999 FI 991386
(71) Applicant: Posti Ja Pojat Ky, 95200 Simo (FI)
(72) Inventor: Posti, Matti Antero, 95200 Simo (FI)
(74) Representative: Laurinolli, Tapio Kullervo

(57) **Abstract**

A truck trailer body is characterized in that, for opening the body, the roof (9) is attaced pivotably to the top edge of the first side wall (7), the other side wall (8) is attached pivotably to a second edge (13) of the roof (9), and a hydraulic cylinder or similarly operating device (19, 20; 20') is placed adjacent to the top edge (28, 29) of the front wall and the back wall (5, 6), respectively, which cylinder or device is, on one hand, attached pivotably to said top edge at a distance from the first side wall (7) and, on the other hand, by means of a folding arm and link mechanism (22) to a correponding end edge (31, 32) of the roof at a closer distance from the first side wall, for setting the hydraulic cylinder or similarly operating device (19, 20) in the rest position thereof essentially parallel with the corresponding top edge and, on the other hand, for enlarging the rotative moment directed to the roof (9) in the initial stage of the opening. By means of the invention the interior of the trailer body is on the side of the second side wall (8) accessed without any obstacles laterally and from upwards.

## Description

The invention is related to a truck trailer body and, more accurately, to a closed-top trailer body which includes a floor, a front wall, a back wall, two opposite sidewalls and a roof.

In a conventional closed-top truck trailer, the back wall includes doors through which loading and unloading are made. A conventional solution is also that sidewalls include doors, often slide doors. Solutions are known also in which essentially the whole side wall of the body may be opened, e.g. by means of an arrangement of folding or sliding doors. One solution of this kind is presented in U.S. Patent No. 4668008. With such a solution, cargo loading and anloading is made faster and more flexible.

A completely opening side wall is used in refrigerator or freezer trailer bodies, for example, with which it is often necessary to be able to load and unload goods in various places fast and in an order which is as optional as possible.

With a completely opening side wall, a problem still is that the roof and the edge of the roof hamper loading and unloading. The goods must be moved to the interior of the body and removed therefrom horizontally. With refrigerator trailer bodies, a problem of a sidewall including several doors and complicated opening and closing mechanisms is also that there are a lot of joints to be sealed and door frame structures which deteriorate thermal insulation. Complicated door mechanisms include also many parts subject to wearing, and the wearing deteriorates further tight closing of the doors.

An object of the invention is to provide a solution which alleviates problems described above.

For realizing this and other objects and advantages of the invention, a truck trailer body according to the invention which includes a floor, a front wall, a back wall, two opposite side walls and a roof, is characterized in that, for opening the body, it includes as a combination the following features: the roof is at a first edge thereof attaced pivotably to the top edge of one side wall; the other side wall is at the top edge thereof attached pivotably to a second edge, opposite to the first edge, of the roof; and a hydraulic cylinder or similarly operating device is placed adjacent to the top edge of the front wall and the back wall, respectively, which cylinder or device is, on one hand, attached pivotably to said top edge at a distance from the first side wall and, on the other hand, by means of a folding arm and link mechanism to a correponding end edge of the roof at a closer distance from the first side wall; for setting the hydraulic cylinder or similarly operating device in the rest position thereof essentially parallel with the corresponding top edge and, on the other hand, for enlarging the rotative moment directed to the roof in the initial stage of the opening.

In an advantageous embodiment of the invention the arm and link mechanism includes an arm which is attached with a first pivotable attachment to the end edge of the roof and with a second pivotable attachement to the hydraulic cylinder or similarly operating device, and a foldable stop arrangement between the arm and the end edge of the roof for turning the arm in the rest position thereof essentially parallel with the hydraulic cylinder and the end edge of the roof and by the action of the pushing force of the hydraulic cylinder to an angle in relation to the end edge of the roof limited by the stop arrangement, for enlarging the rotative moment directed to the roof in the initial stage of the opening.

In a preferred embodiment of the invention the rod part of the hydraulic cylinder is attached to the upper corner of the end wall and the cylinder part to the middle part of the end edge of the roof.

In the solution of the invention the floor, walls and roof of a trailer body may be insulated for refrigerated transport.

The solution of the invention makes the loading and unloading of the trailer body easier. In a refigerator application it reduces the number and length of joints to be sealed and simplifies also otherwise the construction in comparison with the corresponding solutions with completely opening side wall. The trailer body may be realized also in such a way that there are no support structures of e.g. steel which extend through the wall structure and conduct heat through the wall. Accordingly, the invention improves the tightness of a refrigerator trailer body and reduces energy consumption of reftrigerated transport.

The invention and some embodiments thereof are described in further detail in the following with reference to the attached drawings, wherein:
Figs. 1 and 2 present schematically in perspective an embodiment of a truck trailer body according to the invention, the body being closed and opened, respectively;
Fig. 3 presents a schematical cross section of an embodiment of a truck trailer body according to the invention;
Fig. 4 presents schematically a longitudinal section of an embodiment of a truck trailer body according to the invention;
Fig. 5 presents in further detail an end view of an example of opening and closing a truck trailer body according to the invention by means of a hydraulic cylinder; and
Fig. 6 is an enlarged partial plan view which presents schematically an example of opening and closing a truck trailer body according to the invention by means of a hydraulic cylinder.

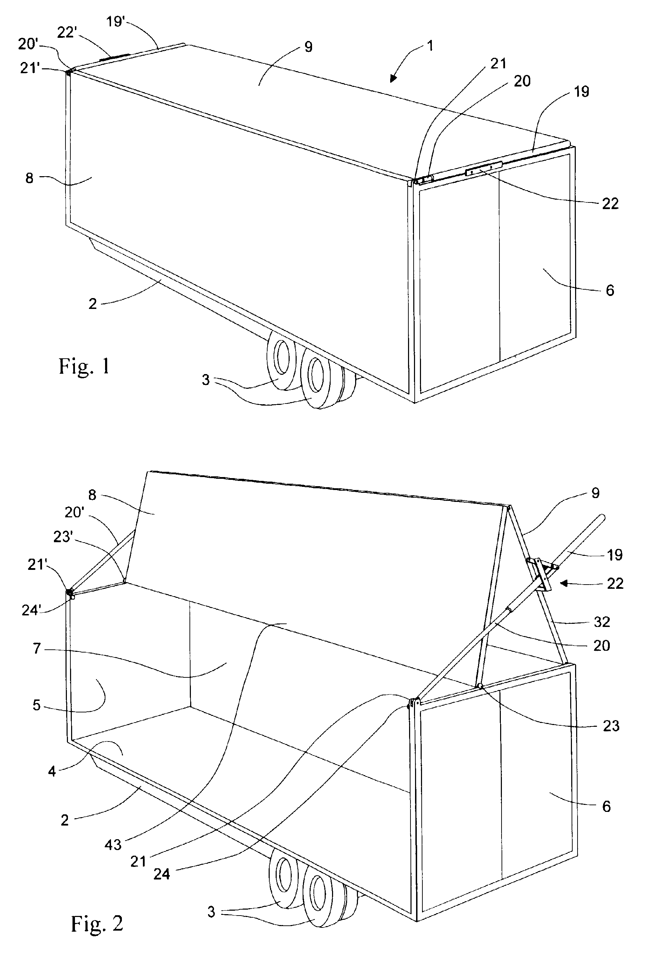

Figs. 1 and 2 present, as a whole, a closed-top truck trailer body 1 which is used in a conventional way as attached to a frame 2 provided with wheels 3. The trailer body includes a floor 4, a front wall 5, a back wall 6 which is, as normally, provided with doors, a first side wall 7, a second side wall 8, and a roof 9. The roof 9 is attached pivotably to the top edge of the side wall 7, and the second side wall 8 is attached pivotably to the other edge of the roof. Adjacent to the top edge of each end wall 5 and 6, respectively, the end edges of the roof hydraulic cylinders 19', 20' and 19, 20 are placed, the ends of the rod parts 20' and 20 thereof being attached pivotably to the upper comers 21' and 21 of the end walls, and the cylinder parts thereof being attached pivotably to the middle parts of the end edges of the roof 9 by means of arm and link arrangements 22' and 22, respectively. In the rest position, the trailer body being closed, the hydraulic cylinders lie essentially parallel and in close vicinity with said edges and extend practically over the whole length of the end edges, so that the roof may be opened widely enough with them.

As the trailer body is opened, side wall 8 is raised with the roof and slides on the upper corners of the end walls 5 and 6. As the lower edge of the side wall 8 is raised over the corners, the side wall is folding towards the roof sliding now on the lower corners thereof which also are provided with rolls 23' and 23 for making the sliding easier. The whole area of the side wall and the most of the area of the roof are now open without any obstacles, so that with loading goods may be brought to the interior also from upper side directly and obliquely and that the goods may be unloaded, respectively, by lifting directly or obliquely upwards.

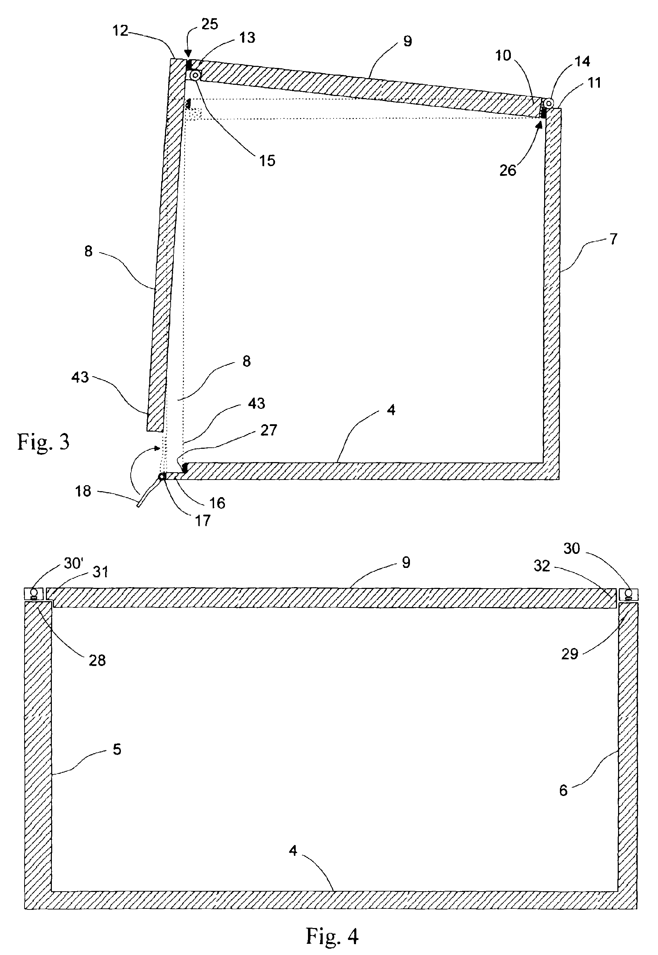

Figs. 3 and 4 present, respectively, a simplified schematical cross section and longitudinal section of an embodiment of the trailer body according to the invention. The floor 4, the end walls 5 and 6 and the first side wall 7 form an integral structure which may be made, for example, of insulated wall elements joint to each other and reinforced with suitable support structures. Between the upper edge 11 of the first side wall 7 and the correponding edge 10 of the roof 9, there are a hinge arrangement 14 and a gasket 26. The hinge arrangement 14 allows the roof 9 to turn from horizontal to vertical position and even further on. Between the other edge 13 of the roof 9 and the second side wall 8 there are a hinge arrangement 15 and a gasket 25. The hinge arrangement allows the wall 8 to turn towards the roof 9 from rectangular position in relation thereof. The hinge arrangements 14 and 15 may be formed of a hinge joint extending over the whole edge or of several separate hinges between the corresponding edges. The edge 16 of the floor 4 on the side of the opening side wall 8 is designed so that the lower edge 43 of the side wall may be supported and sealed properly against it. The edge 16 of the floor is provided with a gasket 27. Furthermore, the outside of the edge 16 of the floor is provided with means 17, 18 for supporting and latching the lower side 43 of the wall against the edge 16 of the floor. In the example of Fig. 3, the supporting and latching means include arms 18 rotating on axle 17 hinged to the edge 16 of the floor and a latching mechanism (not shown).

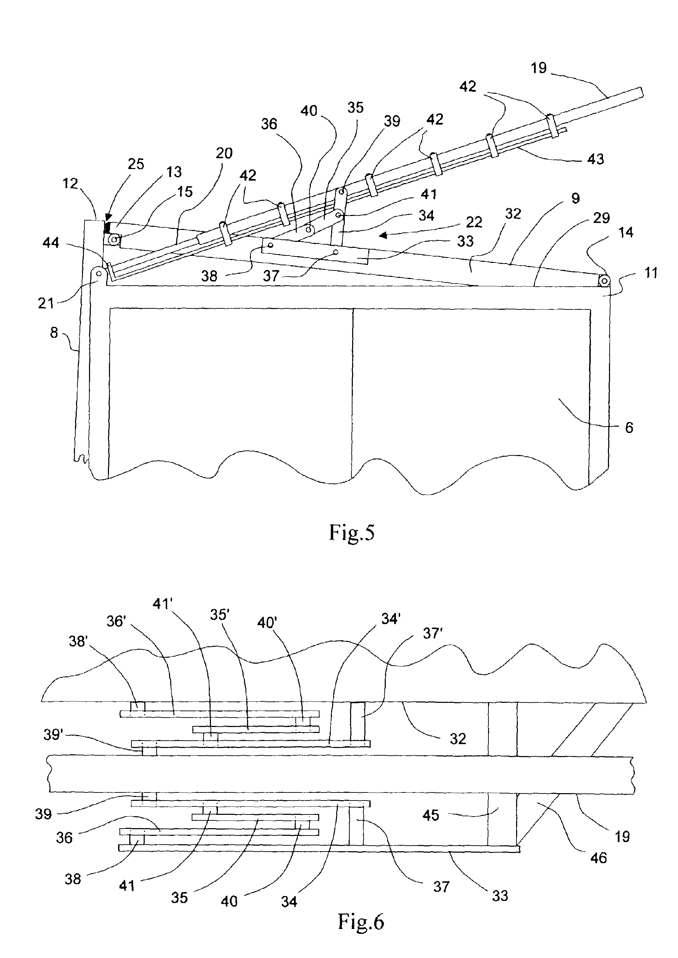

Fig. 4 illustrates schematically placing of the hydraulic cylinder units 30 and 30', formed by hydraulic cylinders and the attachment arrangements thereof, on the corresponding upper edges 29 and 28 of the end walls 6 and 5. Attachments to the upper edges 29 and 28 and the corresponding end edges 32 and 31 of the roof 9 are not presented here, an example of attachments being presented in further detail with reference to Figs. 5 and 6. Of course, there are also gaskets, which are not shown in Fig. 4, between the end edges of the roof and the corresponding upper edges of the end walls.

In case of a refrigerator trailer body, refrigeration device is installed on the trailer body, normally in the vicinity of the front wall 5. Such accessories of the trailer body, not as such relating to the invention, are not presented here.

With reference to Fig. 5, the rod part 20 of the hydraulic cylinder is attached pivotably to the upper corner 21 of the end wall 6, so that the cylinder is able to turn to the rest position thereof on the upper edge 29 of the end wall. As the hydraulic cylinder expands far, it is provided with a support structure including guide pieces 42 attached to the cylinder part 19 and a bar 43 sliding through the pieces and attached at the other end 44 thereof to the end of the rod part of the cylinder. For causing the hydraulic cylinder to raise the roof 9 in the initial stage of opening, it is attached to the end edge 32 of the roof with an arm and link mechanism 22 the plan view of which is shown in further detail in Fig. 6. For the sake of clarity, no hydraulic connections are shown in the figures.

Support plate 33 is attached to the edge 32 of the roof with support bars 45 and 46 placed under the cylinder part 19. Short shafts 39, 39' are attached to the cylinder part 19 and, correspondingly, shafts 37, 37' attached to the support plate 33 and the edge 32 of the roof extending close to the cylinder part. On the shafts, corresponding arms 34, 34' are attached pivotably on which arms the cylinder 19, 20 turns obliquely upwards as the opening of the roof is started by means of the pushing force of the cylinder. Between the arms 34, 34' and the support plate 33 and the edge 32 of the roof there is an arm mechanism formed by arms 35, 36; 35' 36' and shafts 38, 40, 41; 38', 40', 41', respectively, folding to the rest position and limiting the opening of arms 34, 34'. By means of the arm and link mechanism a big enough rotative moment is directed to the roof in the initial stage of the opening.

Some examples of the realization of the invention are described above, the invention of course not being restricted thereto. Instead of a hydraulic cylinder, a similarly operating technical device may be used which provides a long enough pushing between the upper edge of the end wall and the arm and link mechanism attached to the edge of the roof. Such a device may be a combination of a gear rack and gearwheel or a screw driven by an electric motor, for example. As to the technical properties, hydraulic cylinder, however, is a preferred embodiment. A hydraulic cylinder (or a similarly operating device) may be attached at one end thereof closer to the first side wall at a suitable distance thereof and, correspondingly, the arm and link mechanism on the edge of the roof also closer to the first side wall, but the a bigger force is needed to lift the roof and the second side wall as the lever arm is shorter.

The invention may be varied within the scope of the accompanying claims.

## Claims

1. A truck trailer body (1) which includes a floor (4), a front wall (5), a back wall (6), side walls (7, 8) and a roof (9), **characterized** in that, for opening the body, it includes as a combination the following features:
the roof (9) is at a first edge (10) thereof attaced pivotably to the top edge (11) of the first side wall (7);
the other side wall (8) is at the top edge (12) thereof attached pivotably to a second edge (13), opposite to the first edge (10), of the roof (9); and
a hydraulic cylinder or similarly operating device (19', 20'; 19, 20) is placed adjacent to the top edge (28, 29) of the front wall and the back wall (5, 6), respectively, which cylinder or device is, on one hand, attached pivotably to said top edge at a distance from the first side wall (7) and, on the other hand, by means of a folding arm and link mechanism (22; 33 - 41, 33' - 41') to a correponding end edge (31, 32) of the roof at a closer distance from the first side wall (7), for setting the hydraulic cylinder or similarly operating device (19', 20'; 19, 20) in the rest position thereof (Fig. 1) essentially parallel with the corresponding top edge (28, 29) and, on the other hand, for enlarging the rotative moment directed to the roof (9) in the initial stage of the opening (Fig. 5).

2. A truck trailer body (1) according to claim 1, **characterized** in that the arm and link mechanism includes an arm (34, 34') which is attached with a first pivotable attachment (37, 37') to the end edge (32) of the roof and with a second pivotable attachement (39, 39') to the hydraulic cylinder or similarly operating device (19), and a foldable stop arrangement (35, 36, 38, 40, 41; 35', 36', 38', 41') between the arm (34, 34') and the end edge (32) of the roof for turning the arm in the rest position thereof essentially parallel with the hydraulic cylinder (19) and the end edge (32) of the roof and by the action of the pushing force of the hydraulic cylinder or similarly operating device to an angle in relation to the end edge (9) of the roof limited by the stop arrangement (Fig. 5) for enlarging the rotative moment directed to the roof in the initial stage of the opening.

3. A truck trailer body (1) according to claim 1, **characterized** in that the rod part (20, 20') of the hydraulic cylinder is attached to the upper corner (21', 21) of the end wall (5, 6) and the cylinder part (19) to the middle part of the end edge (32) of the roof (9).

4. A truck trailer body (1) according to claim 1, **characterized** in that the floor (4), walls (5, 6, 7, 8) and roof (9) of a trailer body are insulated for refrigerated transport.
